# EUROPÄISCHE PATENTSCHRIFT

(11) **EP 0 399 216 B1**
(45) Veröffentlichungstag und Bekanntmachung des Hinweises auf die Patenterteilung: **01.09.1993**
(21) Anmeldenummer: 90107585.3
(22) Anmeldetag: 20.04.1990
(51) Int. Cl.: F01L 1/02

(54) **Brennkraftmaschine mit zwei Zylinderreihen in V-Anordnung und obenliegenden Nockenwellen**
Internal combustion engine with two cylinder banks in V shape and overhead camshafts
Moteur à combustion interne avec deux rangées de cylindres en V et arbres à cames en tête

(30) Priorität: 20.05.1989 DE 3916512
(43) Veröffentlichungstag der Anmeldung: 28.11.1990
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE S. A., 92506 Rueil-Malmaison (FR)
(72) Erfinder: Weber, Gottfried, D-5000 Köln 1 (DE); Meurer, Josef, D-5210 Troisdorf (DE); Metz, Hans-Walter, D-5024 Pullheim (DE)
(74) Vertreter: Messulam, Alec Moses

(56) Entgegenhaltungen:
- DE-A- 2 041 964
- US-A- 3 452 610
- US-A- 4 674 452
- PATENT ABSTRACTS OF JAPAN vol. 8, no. 104 (M-296)(1541) 16 Mai 1984, & JP-A-59 15612 (YAMAHA) 26 Januar 1984,

## Beschreibung

Die Erfindung bezieht sich auf eine Brennkraftmaschine mit zwei Zylinderreihen in V-Anordnung und obenliegenden Nockenwellen, der im Oberbegriff des Patentanspruches 1 erläuterten Art.

Aus der US-PS 4,230,074 ist eine Brennkraftmaschine dieser Art bekannt, wobei die Nockenwellen der beiden Zylinderreihen über zwei Kettenantriebe von je einer innenliegenden Zwischenwelle angetrieben sind, die zwischen den Zylinderreihen parallel zu diesen angeordnet sind und ihrerseits von der Kurbelwelle über je eine eine Untersetzung enthaltende Übertragungen in Form zweier weiterer Kettenantriebe angetrieben sind.

Bei der bekannten Brennkraftmaschine wird bereits der Vorteil realisiert, daß die Zylinderköpfe mit ihren Nockenwellen und Antriebsrädern als identisch ausgebildete um 180° zueinander gedreht montierte Baueinheiten ausgebildet sind und die entsprechenden Antriebsübertragungen jeweils einmal vorne und einmal hinten am Zylinderblock/Zylinderkopf in den durch den Versatz der Zylinderreihen gebildeten Räumen angeordnet sind.

Die bekannte Brennkraftmaschine weist jedoch den Nachteil auf, daß durch die zwei als Stummelwellen ausgebildeten Zwischenwellen die jeweils vorne und hinten am Zylinderblock angeordnet sind, vier Lagerungen und auch zwei Übertragungen, einmal in Form einer eine Untersetzung enthaltenden Zahnradantriebes und einmal in Form einer eine Untersetzung enthaltenden Kettenantriebes erforderlich sind.

Aus der US-PS 4,633,826 ist eine Brennkraftmaschine mit Zylinder in V-Anordnung bekannt, bei der gleichfalls identisch ausgebildete und um 180° zueinander gedreht montierte Zylinderkopf/Nockenwellen/Baueinheiten vorgesehen werden, wobei auch hier zwei Untersetzungs-Antriebe verwendet werden.

Aus der japanischen Druckschrift JP-A-59 015 612, insbesondere deren Figuren 2 und 3 ist eine Brennkraftmaschine mit zwei Zylinderreihen in V-Anordnung und obenliegenden Nockenwellen bekannt, wobei die Nockenwellen der beiden Zylinderreihen über zwei Kettenantriebe vom vorderen bzw. hinteren Ende einer einzigen zentralen, durchgehenden Zwischenwelle gleichzeitig angetrieben sind. Die Lager der Zwischenwelle scheinen hierbei den Lagern einer üblichen, für einen Stoßstangen-Ventiltrieb vorgesehenen zentralen Nockenwelle zu entsprechen.

Die bekannte Brennkraftmaschine ist jedoch offensichtlich als eine eigenständige Baureihe konstruiert und es werden keinerlei Hinweise darauf gegeben, daß bereits vorhandene Bauteile einer früheren Baureihe entsprechend umgearbeitet werden könnten.

Aus der DE-OS 20 41 964 ist eine Brennkraftmaschine mit zwei Zylinderreihen in V-Anordnung und obenliegenden Nockenwellen bekannt, bei der wieder die gleichen Vorteile durch die Verwendung von identischen um 180° zueinander gedreht montierten Zylinderkopf/Nockenwellen/Baueinheiten ausgeschöpft werden und bei der die beiden Nockenwellen von einer einzigen von der Kurbelwelle über eine eine Untersetzung enthaltenden Übertragung angetrieben werden, wobei jedoch die Zwischenwelle offensichtlich außerhalb des Motorblockes verläuft und die Kettenantriebe für die Nockenwellen innerhalb der Zylinderreihen verlaufen und dementsprechend nicht die durch den Versatz der Zylinderreihen gebildeten Räume ausnützen. Diese Brennkraftmaschine baut also länger als notwendig.

Aus der EP-OS 0,124,433 ist eine Brennkraftmaschine mit einer Zylinderreihe und einer obenliegenden Nockenwelle bekannt, wobei der Kettenantrieb von der Kurbelwelle zur obenliegenden Nockenwelle und zu weiteren Hilfsaggregaten wie z.B.: zur Einspritzpumpe, zu einer Kassettenbaueinheit zusammengefaßt ist, die an der Stirnseite des Motorblocks montierbar ist und damit die Motorbaulänge vergrößert.

Die Aufgabe der Erfindung ist es, eine Brennkraftmaschine der im Oberbegriff des Patentanspruches 1 erläuterten Art derart zu verbessern, daß die durch diese Bauform erzielbaren Vorteile noch dadurch vergrößert werden, daß für den Antrieb der Zwischenwelle nur eine, eine Untersetzung enthaltende Übertragung in Form eines Kettentriebes erforderlich ist, und indem eine einzige zentrale Zwischenwelle in den Lagern einer Nockenwelle für einen Stoßstangen Ventiltrieb angeordnet wird und hierbei die baulichen Vorgaben einer Baureihe von Brennkraftmaschinen mit zwei Zylinderreihen in V-Anordnung und einer zentralen Nockenwelle und einem Stoßstangen-Ventiltrieb derartergänzt werden, daß die Erfordernisse der angestrebte Bauform einer Brennkraftmaschine mit obenliegender Nockenwelle berücksichtigt werden.

Gemäß der Erfindung wird die Aufgabe gelöst, indem eine Brennkraftmaschine mit zwei Zylinderreihen in V-Anordnung und obenliegenden Nockenwellen gemäß dem Oberbegriff des Patentanspruches 1 die im Kennzeichenteil des Patentanspruspruches 1 aufgezeigten Merkmale aufweist.

Dadurch, daß die beiden Kettenantriebe vom vorderen bzw. hinteren Ende einer einzeigen in den Lagern einer ursprünglich für einen Stoßstangen-Ventiltrieb vorgesehenen, zentralen Nockenwelle angeordneten, durchgehenden Zwischenwelle angetrieben werden, und die in der vorderen und hinteren Stirnseite des Motorblockes erforderlichen Ausnehmungen für die Kettenantriebe maschinell bearbeitet werden und durch eingefügte vorab montierte Kassettenbauteile geschlossen und gemeinsam mit den Zylinderblock-Stirnflächen bearbeitet werden und nachfolgend die Kassettenbauteile zur Montage der Kettenantriebe abgenommen und nach erfolgter Montage wieder eingesetzt werden, kann ausgehend von einer Baureihe von Brennkraftmaschinen mit zwei Zylinderreihen in V-Anordnung und zentraler Nockenwelle und Stoßstangen-Ventiltrieb unter Beibehaltung wesentlicher Bauteile und Bearbeitungsvorrichtungen, wie z.B. dem Zylinderblock und der hierfür erforderlichen Transferstaßen eine leistungsfähigere Brennkraftmaschine abgeleitet werden, die nur unter verhältnismäßig geringen zusätzlichen Bearbeitungsmaßnahmen und anderen Bauteilen als eine Variation der ursprünglichen Brennkraftmaschine auch auf den gleichen Fertigungs- und Montageeinrichtungen hergestellt werden kann.

Durch nur wenig abweichenden Gußteile kann, in der Großserienfertigung eine Ausnützung der vorhandenen Bearbeitungs- und Montageeinrichtungen sicherstellt werden.

Dadurch, daß die erforderlichen Kettenführungen und Kettenspanner in den verlängerten Enden der identischen Zylinderköpfe angeordnet sind, ist auch für diese norwendigen Bauteile keine Veränderung an dem den Ausgang bildenden Zylinderblock erforderlich.

Die beiden Kettenantriebe können in einer weiteren Ausführungsform der Erfindung als weitgehend identische, voll abgeschlossene Kassettenbaueinheiten ausgebildet werden, die sowohl am Zylinderblock als auch am Zylinderkopf befestigbar sind und durch Steckverbindungen in Antriebsverbindung mit den entsprechenden Welle gelangen.

Die Zwischenwelle kann vorzugsweise als Antriebswelle für zusätzliche Aggregate wie z.B.: einer Ölpumpe, einer Ausgleichswelle oder eines Zündverteilers dienen.

Durch die Integrierung der Kassettenbaueinheiten in den Zylinderblock, wird eine möglichst kurze Baulänge der Brennkraftmaschine erzielt.

Ebenso kann mittels des neuen Nockenwellenantriebs auch der Antrieb zweier obenliegenden Nockenwellen je Zylinderreihe erfolgen, wobei der Antrieb der zweiten Nockenwelle an dem jeweils anderen Wellenende über z.B. einen Zahnrad- oder Kettenantrieb erfolgt.

Die Erfindung wird anhand eines in den beiliegenden Zeichnungen gezeigten Ausführungsbeispieles näher erläutert. Es zeigt:
- Fig. 1: eine Ansicht der Brennkraftmaschine gemäß der Erfindung von der Stirnradseite;
- Fig. 2: eine Ansicht der Brennkraftmaschine nach Fig. 1 von der Schwungradseite;

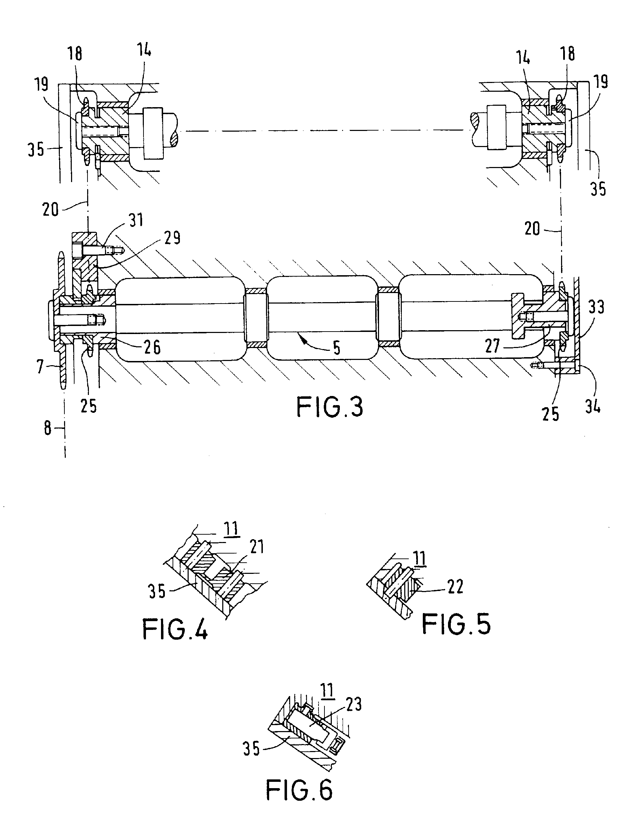

- Fig. 3: einen Schnitt entlang der Linie III-III in Fig. 1 mit in fluchtender Anordnung gezeichneten Schnitten entlang der Linie A-A in Fig. 1 bzw. B-B in Fig. 2;
- Fig. 4: einen Schnitt entlang der Linie IV-IV in Fig. 1;
- Fig. 5: einen Schnitt entlang der Linie V-V in Fig. 1 und
- Fig. 6: einen Schnitt entlang der Linie VI-VI in Fig. 1.

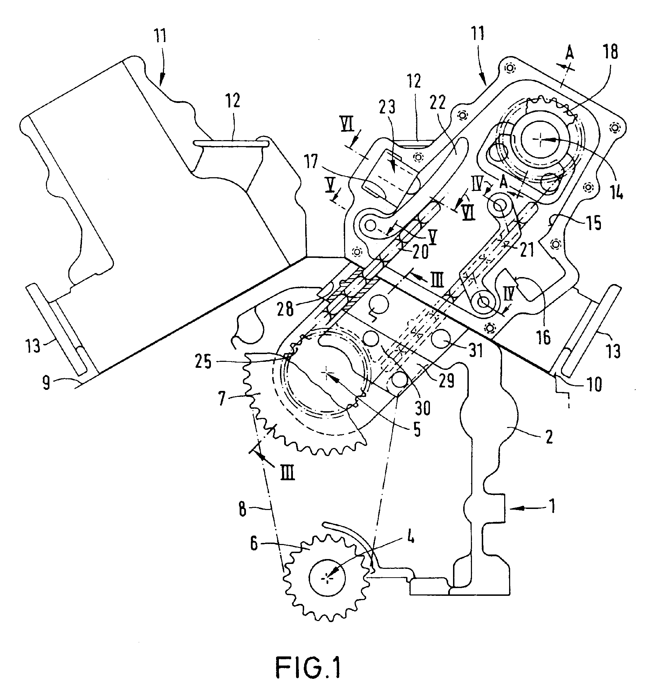

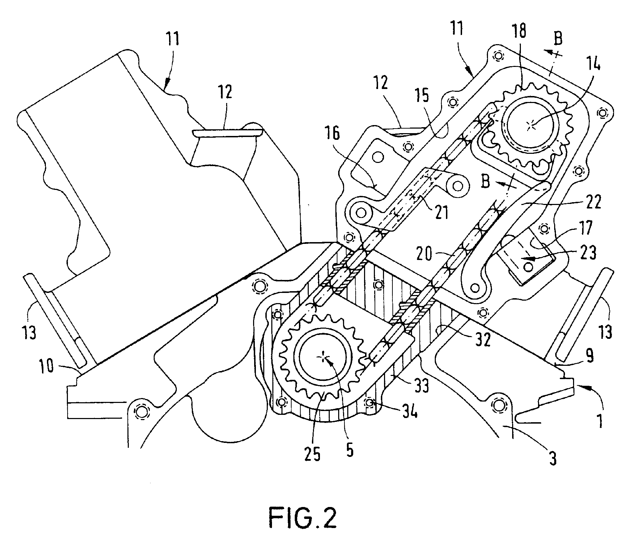

Bei der in den Figuren 1 und 2 nur grob angedeuteten Brennkraftmaschine mit zwei Zylinderreihen in V-Anordnung und obenliegenden Nockenwellen ist ein im wesentlichen herkömmlicher Motorblock 1 teilweise dargestellt und zwar so, daß der jeweils für den erfindungsgemäßen Nockenwellenantrieb wesentliche Bereich des Stirnradflansches 2 oder des Schwungradflansches 3 ersichtlich ist.

Im Motorblock 1 ist eine nur durch ihren Mittelpunkt dargestellte Kurbelwelle 4 in üblicher Weise drehbar gelagert angeordnet. Eine in den Figuren 1 und 2 gleichfalls nur durch ihren Mittelpunkt dargestellte Zwischenwelle 5 ist im Motorblock 1 in den Lagern angeordnet, die normalerweise für einen Stoßstangen-Ventiltrieb für die zentral angeordnete Nockenwelle vorgesehen sind.

An der Kurbelwelle 4 ist ein kleines Kettenrad 6 und an der Zwischenwelle 5 ist ein großes Kettenrad 7 angeordnet, die miteinander über einen Kettenantrieb 8 treibend verbunden sind und einen untersetzten Antrieb herstellen.

Der Motorblock 1 ist in herkömmlicher Weise mit bearbeiteten Zylinderkopf-Anlageflächen 9 und 10 versehen, an denen unter Zwischenschaltung einer üblichen Zylinderkopfdichtung die die Ein- und Auslaßkanäle mit ihren entsprechenden Ventilen und dem übrigen Ventiltrieb enthaltenden Zylinderköpfe befestigt werden.

Gemäß der vorliegenden Ausführungsform sind die beiden Zylinderköpfe als identische nur jeweils um 180° gedreht montierte Baueinheiten ausgebildet und sind daher beide mit dem gleichen Bezugszeichen 11 versehen.

Die Zylinderköpfe 11 weisen innenliegend Anschlußflansche 12 für einen Ansaug-Verteiler (nicht gezeigt) und außenseitig Anschlußflansche 13 für einen Auspuffsammler (nicht gezeigt) auf.

In den Zylinderköpfen 11 ist eine obenliegende Nockenwelle 14 in üblicher Weise drehbar gelagert angeordnet, so daß weitere Einzelheiten derselben nicht dargestellt sind.

Die Zylinderköpfe 11 weisen an ihrer einen Stirnseite eine Ausnehmung 15 auf, die an beiden Seiten mit taschenförmigen Ausnehmungen 16 und 17 versehen ist und zur Aufnahme des Nockenwellen-Kettenantriebes dient.

Am vorderen Ende der Nockenwelle 14 ist ein Kettenrad 18 über eine Befestigungsschraube 19 festgelegt, das mit einem Kettenantrieb 20 zusammenwirkt, der über eine Kettenführung 21 aus Kunststoff und einem Spannarm 22 aus Kunststoff in Verbindung mit einem hydraulischen Kettenspanner 23 geführt und gespannt wird.

Der Kettenantrieb 20 wirkt jeweils mit einem Kettenrad 25 zusammen, von denen das eine am vorderen Ende 26 der Zwischenwelle 5 angeordnet ist, während das andere am hinteren Ende 27 der Zwischenwelle 5 befestigt ist.

Im Bereich des vorderen Endes 26 der Zwischenwelle 5 ist im Stirnradflansch 2 des Zylinderblocks 1 ein Ausschnitt 28 vorgesehen der bearbeitet wird und der durch ein eingefügtes Kassettenbauteil 29 mit einer Halteplatte 30 und Befestigungsbolzen 31 derart vorab geschlossen wird, daß eine gemeinsame Bearbeitung der Motorblock-Stirnseite erfolgen kann. Das Kassettenbauteil 29 ist innen so ausgebildet, daß ein Durchtritt des Kettentriebs 20 und ein Anschluß an die Motorschmierung ermöglicht wird.

In ähnlicher Weise ist im Bereich des hinteren Endes 27 der Zwischenwelle 5 im Schwungradflansch 3 ein Ausschnitt 32 vorgesehen, in dem ein Kassettenbauteil 33 eingefügt und über Schraubenbolzen 34 am Motorblock 1 befestigt wird, derart, daß innerhalb des Kassettenbauteiles 33 ein Verlauf des Kettenantriebes 20 gewährleistet ist, jedoch der Schwungradflansch 3 in seiner Kontur und Ebenheit wieder voll geschlossen wird.

Es wird darauf hingewiesen, daß die im Zylinderkopf 11 in der Ausnehmung 15 vorgesehenen Ausnehmungen 16 und 17 sowie entsprechende Befestigungsbohrungen für die Kettenführung 21 aus Kunststoff und den Spannarm 22 sowie den hydraulischen Kettenspanner 23 derart angeordnet sind, daß diese Bauteile seitenverkehrt angeordnet werden können, derart, daß jeweils die Kettenführung 21 am gezogenen Trumm des Kettenantriebes 20 und der Spannarm 22 mit dem Kettenspanner 23 jeweils am geschobenen Trumm angeordnet werden können.

Die an einem Ende der Zylinderköpfe 11 ausgebildete Ausnehmung 15, die den Kettenantrieb 20 aufnimmt, wird schließlich mit einem Abschlußdeckel 35 verschlossen, der über entsprechende Befestigungsschrauben festgelegt wird.

Nach einer weiteren denkbaren Ausführungsform der Erfindung können die Kassettenbauteile jeweils mit dem Endabschnitt der Zylinderköpfe, der den Kettenantrieb aufnimmt, in einem durchgehenden Stück ausgeführt werden, so daß voll abgeschlossene Kassettenbaueinheiten entstehen, die sowohl am Zylinderblock als auch am Zylinderkopf befestigt werden, wobei für die Antriebsverbindung zwischen den in den Kassettenbaueinheiten angeordneten Kettentrieben und den entsprechenden Enden der Zwischenwelle geeignete Steckverbindungen vorgesehen werden könne.

Die Zwischenwelle kann vorzugsweise als Antriebswelle für zusätzliche Aggregate wie z.B.: einer Ölpumpe, einer Ausgleichswelle oder eines Zündverteilers dienen.

Durch die Integrierung der Kassettenbaueinheiten in den Zylinderblock wird eine möglichst kurze Baulänge der Brennkraftmaschine erzielt.

Selbstverständlich kann der erfindungsgemäße Nockenwellenantrieb auch für V-Motoren mit je zwei obenliegenden Nockenwellen pro Zylinderreihe Anwendung finden, wobei der Antrieb der zweiten Nockenwelle an dem jeweils anderen Wellenende über z.B. einen Zahnrad- oder Kettentrieb erfolgen kann.

## Patentansprüche

1. Brennkraftmaschine mit zwei Zylinderreihen in V-Anordnung und oben liegenden Nockenwellen (14), wobei die Nockenwellen (14) der beiden Zylinderreihen über je einen Kettenantrieb (20) von einer innenliegenden Zwischenwelle (5) angetrieben sind, die zwischen den Zylinderreihen parallel zu diesen angeordnet ist und ihrerseits von der Kurbelwelle (4) über eine eine Untersetzung bildende Übertragung (8) angetrieben ist und die Zylinderköpfe (11) mit ihren Nockenwellen (14) und Antriebsrädern (18) als identisch ausgebildete um 180 Grad zueinandergedreht montierbare Baueinheiten ausgebildet sind und dementsprechend die beiden Kettenantriebe (20) jeweils einmal vorne und hinten am Zylinderblock (1) und stirnseitige am Zylinderkopf (11) in den durch den Versatz der Zylinderreihen gebildeten Räumen angeordnet sind,
**dadurch gekennzeichnet**, daß
- die beiden Kettenantriebe (20) vom vorderen bzw. hinteren Ende (26 bzw. 27) einer einzigen, in den Lagern einer ursprünglichen für einen Stoßstangen-Ventiltrieb vorgesehenen zentralen Nockenwelle angeordneten, durchgehenden Zwischenwelle (5) gleichzeitig angetrieben sind und
- der Motorblock (1) in seiner ursprünglichen Form für eine zentrale Nockenwelle und Stoßstangen-Ventiltrieb ausgebildet ist und in seinen vorderen und hinteren Stirnseiten (2 und 3) mit durch maschinelle Bearbeitung hergestellten Ausschnitten (28 und 32) für die beiden Kettenantriebe (20) versehen ist und die Ausschnitte (28 und 32) durch einfügbare, die Kettenantriebe (20) aufnehmende Kassettenbauteile (29/30 bzw. 33) geschlossen sind.

2. Brennkraftmaschinen nach Anspruch 1,
**dadurch gekennzeichnet**, daß
- die an den Zylinderköpfen (11) am einen Ende angeordneten Ausnehmungen (15, 16 und 17) derart angeordnet sind, daß die Kettenführung (21) aus Kunststoff und der Spannarm (22) in Verbindung mit dem hydraulischen Kettenspanner (23) wechselseitig montierbar sind.

3. Brennkraftmaschinen nach den Ansprüchen 1 und 2,
**dadurch gekennzeichnet**, daß
- die in die Ausschnitte im Zylinderblock eingesetzten Kassettenbauteile in einem Stück mit entsprechenden Kassettenbauteilen für den Zylinderkopf ausgebildet sind und voll abgeschlossene Kassettenbaueinheiten bilden, die sowohl am Zylinderblock als auch am Zylinderkopf befestigbar sind, wobei für die entsprechenden treibenden Verbindungen mit der Zwischenwelle bzw. den Nockenwellen als entsprechende Steckverbindungen ausgebildet sind.

4. Brennkraftmaschine nach den Ansprüchen 1 bis 3,
**dadurch gekennzeichnet**, daß
- die Zwischenwelle (5) als Antriebwelle für zusätzliche Aggregate, wie z.B. eine Ölpumpe, eine Ausgleichswelle oder einem Zündverteiler dient.

5. Brennkraftmaschine nach den Ansprüchen 1 bis 4,
**dadurch gekennzeichnet**, daß
- zwei obenliegende Nockenwellen je Zylinderreihe vorgesehen sind, wobei der Antrieb der zweiten Nockenwelle an dem jeweils anderen Wellenende über z.B. einen Zahnrad- oder Kettenantrieb erfolgt.

6. Brennkraftmaschine nach den Ansprüchen 1 bis 5,
**dadurch gekennzeichnet**, daß
- die Kassettenbaueinheiten in den Zylinderblock integriert ist und sich daraus eine kurze Motor-Bauweise ergibt.

## Claims

1. Internal combustion engine with two rows of cylinders in V formation and overhead camshafts (14), wherein the camshafts (14) of both rows of cylinders are each driven via a chain drive (20) from an internal intermediate shaft (5) which is disposed between the rows of cylinders and in parallel therewith and, in turn, is driven by the crankshaft (4) via a transmission (8) forming a reduction gear, and the cylinder heads (11) with their camshafts (14) and driving sprockets (18) are constructed as identical constructional units mutually displaceable by 180° and accordingly the two chain drives (20) are disposed, one at the front and one at the rear of the cylinder block (1) and at the ends of the cylinder head (11), in the spaces formed by the offset of the rows of cylinders,
characterised in that
- the two chain drives (20) are driven simultaneously by the front and rear ends (26 and 27) of a single continuous intermediate shaft (5) disposed in the bearings of a central camshaft originally provided for a push-rod/valve mechanism, and
- the engine block (1) in its original form is designed for a central camshaft and push-rod/valve mechanism and is provided, on its front and rear faces (2 and 3), with cut-outs (28 and 32) for both chain drives (20), these cut-outs (28 and 32) being produced by machining and closed by means of insertable cartridge-type components (29/30 and 33) which receive the chain drive (20).

2. Internal combustion engines according to Claim 1,
characterised in that
- the recesses (15, 16, 17) disposed on the cylinder head (11) at one end are so disposed that the plastic chain guide (21) and the tensioning arm (22) in conjunction with the hydraulic chain tensioner (23) can be installed on alternate sides.

3. Internal combustion engine according to Claims 1 and 2,
characterised in that
- the cartridge-type components inserted into the cut-outs in the cylinder block are constructed in one piece with corresponding cartridge-type components for the cylinder head and form completely sealed cartridge-type constructional units which can be fixed both to the cylinder block and to the cylinder head, and, for the corresponding driving connections with the intermediate shaft and the camshafts, are constructed as corresponding plug-in connections.

4. Internal combustion engine according to Claims 1 to 3,
characterised in that
- the intermediate shaft (5) serves as a driving shaft for additional units such as an oil pump, a balance shaft or a distributor.

5. Internal combustion engine according to Claims 1 to 4,
characterised in that
- two overhead camshafts are provided for each row of cylinders, the second camshaft being driven at the other respective shaft end via, for example, a gear or chain drive.

6. Internal combustion engine according to Claims 1 to 5,
characterised in that
- the cartridge-type constructional unit is integrated into the cylinder block, resulting in a short engine design.

## Revendications

1. Moteur à combustion interne comprenant deux rangées de cylindres en V et des arbres à cames (14) situés à la partie supérieure, cependant que les arbres à cames (14) des deux rangées de cylindres sont entraînés, par l'intermédiaire d'un entraînement à chaîne (20) pour chacun, par un arbre intermédiaire (5) qui est situé à l'intérieur, qui est disposé entre les rangées de cylindres, parallèlement à celles-ci, et qui est entraîné pour sa part par le vilebrequin (4) par l'intermédiaire d'une transmission (8) constituant une démultiplication, que les culasses (11) sont réalisées avec leurs arbres à cames (14) et leurs roues d'entraînement (18) sous la forme d'ensembles dont la conformation est identique et qui peuvent être montés en étant tournés de 180° l'un par rapport à l'autre, et qu'en correspondance avec cela, les deux entraînements à chaîne (20) sont à chaque fois disposés dans les espaces formés par le décalage des rangées de cylindres, une fois à l'avant et une fois à l'arrière du bloc-moteur (1), et frontalement sur la culasse (11),
caractérisé par le fait que :
- les deux entraînements à chaîne (20) sont entraînés simultanément par l'extrémité avant ou arrière, respectivement, (26 ou 27, respectivement) d'un arbre intermédiaire unique et continu (5) qui est monté dans les paliers d'un arbre à cames central initialement prévu pour une commande des soupapes par poussoirs, et que :
- le bloc-moteur (1) est réalisé sous sa forme d'origine pour un arbre à cames central et pour une commande des soupapes par poussoirs, il est muni, dans ses côtés frontaux avant et arrière (2 et 3), de saignées (28 et 32) qui sont réalisées par usinage à la machine et qui sont destinées aux deux entraînements à chaîne (20), et les saignées (28 et 32) sont fermées par des éléments modulaires (29/30 et 33, respectivement) qui peuvent être encastrés et qui reçoivent les entraînements à chaîne (20).

2. Moteur à combustion interne selon la revendication 1, caractérisé par le fait que les évidements (15, 16 et 17) qui sont disposés à une extrémité sur les culasses (11) sont disposés d'une manière telle que le guidage de chaîne (21) en matière plastique et le bras tendeur (22) en liaison avec le tendeur de chaîne hydraulique (23) puissent être montés de manière inversée.

3. Moteur à combustion interne selon les revendications 1 et 2, caractérisé par le fait que les éléments modulaires qui sont encastrés dans les saignées ménagées dans le bloc-moteur sont réalisés d'un seul tenant avec des éléments modulaires correspondants destinés à la culasse, et qu'ils constituent des unités à cassettes modulaires complètement fermées qui peuvent être aussi bien fixées au bloc-moteur qu'à la culasse, cependant que les liaisons d'entraînement correspondantes avec l'arbre intermédiaire ou avec les arbres à cames, respectivement, sont réalisées sous la forme de liaisons par enfoncement correspondantes.

4. Moteur à combustion interne selon les revendications 1 à 3, caractérisé par le fait que l'arbre intermédiaire (5) sert d'arbre d'entraînement pour des ensembles supplémentaires, comme, par exemple, une pompe à huile, un arbre de compensateur ou un distributeur d'allumage.

5. Moteur à combustion interne selon les revendications 1 à 4, caractérisé par le fait qu'il est prévu deux arbres à cames situés à la partie supérieure pour chaque rangée de cylindres, l'entraînement du deuxième arbre à cames ayant lieu à l'extrémité de l'arbre qui est l'autre à chaque fois, et ce, par exemple, par l'intermédiaire d'un mécanisme à roues dentées ou à chaîne.

6. Moteur à combustion interne selon les revendications 1 à 5, caractérisé par le fait que les unités modulaires sont intégrées au bloc-moteur, et que l'on obtient ainsi une forme de construction du moteur qui présente une faible longueur.
